# EUROPÄISCHE PATENTSCHRIFT

(11) **EP 3 388 780 B1**
(45) Veröffentlichungstag und Bekanntmachung des Hinweises auf die Patenterteilung: **05.06.2019**
(21) Anmeldenummer: 17166549.0
(22) Anmeldetag: 13.04.2017
(51) Int. Cl.: G01B 11/24, G01M 11/02

(54) **VERFAHREN UND VORRICHTUNG FÜR DAS REFERENZIEREN DER LAGE WENIGSTENS EINES PUNKTS AUF ODER IN EINEM TRANSPARENTEN GEGENSTAND**
METHOD AND APPARATUS FOR REFERENCING THE POSITION OF AT LEAST ONE POINT ON OR IN A TRANSPARENT ARTICLE
PROCÉDÉ ET DISPOSITIF DE RÉFÉRENCEMENT DE LA POSITION D'AU MOINS UN POINT SUR UN OBJET TRANSPARENT OU DANS CE DERNIER

(43) Veröffentlichungstag der Anmeldung: 17.10.2018
(73) Patentinhaber: Carl Zeiss Vision International GmbH, 73430 Aalen (DE)
(72) Erfinder: Michels, Georg, D-73430 Aalen (DE); Hanssen, Adalbert, D-73434 Aalen (DE)
(74) Vertreter: Gauss, Nikolai

(56) Entgegenhaltungen:
- DE-A1- 10 333 426
- DE-A1-102013 208 091
- DE-A1-102014 005 281

## Beschreibung

Die Erfindung betrifft ein Verfahren für das Ermitteln der Topografie wenigstens eines Abschnitts einer optisch wirksamen Fläche eines Gegenstands, insbesondere einer Linse, der eine erste optisch wirksame Fläche und eine zweite optisch wirksame Fläche hat.

Darüber hinaus betrifft die Erfindung eine Vorrichtung für das Ermitteln der Lage wenigstens eines Punkts (P) auf oder in einem transparenten Gegenstand, insbesondere einer Linse, der eine erste optisch wirksame Fläche und eine zweite optisch wirksame Fläche hat, in einem Koordinatensystem.

Aus der DE 10 2014 05 281 A1 ist das Bestimmen der exakten Position eines Brillenglases beschrieben, indem die räumliche Position von Permanentmarkierungen auf dem Brillenglas ermittelt wird. Diese Vorrichtung enthält zwei Lichtquellen und zwei Retroreflektoren, die auf dem Brillenglas angeordnete Markierungen sichtbar machen, so dass sie in einer ersten Aufnahmerichtung und in einer von der ersten Aufnahmerichtung verschiedenen zweiten Aufnahmerichtung mit einer Kamera erfasst werden können.

Ein Verfahren und eine Vorrichtung für das Vermessen von optisch wirksamen Flächen sind aus der EP 2 090 861 A1 bekannt. Dort ist das Vermessen der optisch wirksamen Flächen von Linsen mittels eines berührenden Tasters beschrieben.

In der DE 10 2013 208 091 A1 sind ein System und ein Verfahren zur Bestimmung der Topographie und/oder der Flächenkrümmung von Brillengläsern angegeben, das vorsieht, dass anhand von mit einer Kamera erfassten punktförmigen Reflexen des Lichts einer Vielzahl von Leuchtdioden auf den optisch wirksamen Flächen der Brillengläser die Topografie dieser Flächen mittels Bildauswertung bestimmt wird. Hier ist die Kenntnis der genauen räumlichen Lage wenigstens eines Punkts auf der zu vermessenden optisch wirksamen Fläche erforderlich. In der DE 10 2013 208 091 A1 ist erläutert, hierzu die räumliche Lage des wenigstens einen Punkts anhand einer taktilen oder berührungslosen Abstandsmessung zu bestimmen.

Aufgabe der Erfindung ist es, eine ein Verfahren für das berührungslose Ermitteln der Topografie wenigstens eines Abschnitts einer optisch wirksamen Fläche eines Gegenstands, insbesondere einer Linse anzugeben, der eine erste optisch wirksame Fläche und eine zweite optisch wirksame Fläche hat, und eine Vorrichtung für das Ermitteln der Lage wenigstens eines Punkts (P) auf oder in einem transparenten Gegenstand in einem Koordinatensystem anzugeben, insbesondere einer Linse, der eine erste optisch wirksame Fläche und eine zweite optisch wirksame Fläche hat.

Diese Aufgabe wird mit dem in Anspruch 1 angegebenen Verfahren und der in Anspruch 7 angegebenen Vorrichtung gelöst. Vorteilhafte Ausführungsformen der Erfindung sind in den abhängigen Ansprüchen angegeben.

Die Erfindung beruht auf dem Gedanken, dass die Koordinaten von Punkten auf oder in einem transparenten Gegenstand, der eine erste und eine zweite optisch wirksame Fläche hat, photogrammetrisch bestimmt werden können, indem dort Strukturen in Form von Markierungen, insbesondere Permanentmarkierungen, Defekten, Schmutzpartikeln, Fingerabdrücken, Schlieren, Tamponaufdrucke, Inkjet-Aufdrucke etc. mit der Kamera aus unterschiedlichen Aufnahmerichtungen erfasst werden.

Die Erfinder haben erkannt, dass das photogrammetrische Vermessen der Lage dieser Strukturen bei geeigneter Beleuchtung mit einer Genauigkeit möglich ist, die in der Brillenglasproduktion Qualitätskontrollen ermöglicht.

Erfindungsgemäß wird für das Ermitteln der Lage wenigstens eines Punkts (P) auf oder in einem transparenten Gegenstand, insbesondere einer Linse, z. B. einem Brillenglas, einem Brillenglasrohling oder einem Brillenglashalbfabrikat, der eine erste optisch wirksame Fläche und eine zweite optisch wirksame Fläche hat, in einem vorzugsweise zu einer Halteeinrichtung für den Gegenstand ortsfesten Koordinatensystem ein erstes Bild eines Abschnitts des Gegenstands in einer vorzugsweise zu der Halteeinrichtung referenzierten ersten Aufnahmeposition aus einer ersten Aufnahmerichtung mit einem ersten Abbildungsstrahlengang aufgenommen, in dem der wenigstens eine Punkt angeordnet ist. Der Gegenstand wird dabei in der ersten Aufnahmerichtung mit zu der optischen Achse des ersten Abbildungsstrahlengangs koaxialem Beleuchtungslicht beaufschlagt, das den Gegenstand durchsetzt und das nach dem Durchsetzen des Gegenstands in sich selbst zurück reflektiert wird, so dass das Beleuchtungslicht den Gegenstand erneut durchsetzt. Außerdem wird wenigstens ein weiteres Bild des Abschnitts des Gegenstands in wenigstens einer von der ersten Aufnahmeposition verschiedenen weiteren, vorzugsweise zu der Halteeinrichtung referenzierten Aufnahmeposition aus wenigstens einer von der ersten Aufnahmerichtung verschiedenen weiteren Aufnahmerichtung mit einem weiteren Abbildungsstrahlengang aufgenommen, in dem der wenigstens eine Punkt angeordnet ist. Dabei wird der Gegenstand in der wenigstens einen weiteren Aufnahmerichtung wiederum mit zu der optischen Achse des weiteren Abbildungsstrahlengangs koaxialem Beleuchtungslicht beaufschlagt, das den Gegenstand durchsetzt und das nach dem Durchsetzen des Gegenstands in sich selbst zurück reflektiert wird, so dass das Beleuchtungslicht den Gegenstand erneut durchsetzt. Aus Bildkoordinaten des Punkts in dem ersten Bild und aus Bildkoordinaten des Punkts in dem wenigstens einen weiteren Bild werden dann die Ortskoordinaten des wenigstens einen Punkts rekonstruiert.

Bei einer Ausführungsform der Erfindung kann an Stelle des zu einer Halteeinrichtung für den Gegenstand ortsfesten Koordinatensystems auch ein beliebig anderes Koordinatensystem gewählt werden.

Im Sinne der Erfindung wird unter einer optisch wirksamen Fläche eines Gegenstands eine Fläche verstanden, die Lichtstrahlen im sichtbaren oder auch unsichtbaren Spektralbereich zumindest teilweise gerichtet durchlässt oder reflektiert. Im Sinne der Erfindung werden unter einer optisch wirksamen Fläche insbesondere die das Licht brechenden Flächen von einer Linse, z. B. eines Brillenglases, eines Brillenglasrohlings oder eines Brillenglashalbfabrikates verstanden. Zu bemerken ist dabei, dass optisch wirksame Flächen im Sinne dieser Erfindung für das Licht sowohl transparent als auch spiegelnd sein können.

Unter einer Linse ist vorliegend ein Glas- oder Kunststoffkörper zu verstehen, der zwei optisch wirksame, d. h. das Licht brechende Flächen hat, die einander gegenüber liegen. Eine Linse im Sinne der Erfindung ist insbesondere ein Brillenglas, das für das Einsetzen in eine Brillenfassung ausgelegt ist. Der Begriff Linse erstreckt sich vorliegend auch auf sogenannte Brillenglas-Rohlinge, d. h. ein üblicherweise vorgeformtes Materialstück zur Herstellung einer Linse in irgendeinem Zustand vor der Beendigung der Oberflächenbearbeitung, sowie auf sogenannte Brillenglas-Halbfabrikate in Form eines Linsenrohlings mit nur einer optisch fertig bearbeiteten Fläche. Solche Brillenglas-Halbfabrikate werden auch als Brillenglas-Halbfertigprodukte bezeichnet.

Eine Idee der Erfindung ist es, dass die Lage der wenigstens einen weiteren Aufnahmeposition zu der Lage der ersten Aufnahmeposition referenziert ist und/oder dass die Lage der wenigstens einen weiteren Aufnahmerichtung zu der Lage der ersten Aufnahmerichtung referenziert ist. Unter zueinander referenzierten Lagen von zwei oder mehr Aufnahmepositionen ist zu verstehen, dass die Lage, Richtung und sonstigen Aufnahmecharakteristiken der mehreren Aufnahmeeinrichtungen, vorzugsweise Kameras, zueinander bekannt sind. Die genauen Lagen der Aufnahmeeinrichtungen, vorzugsweise Kameras, können z. B. dadurch zueinander referenziert werden, dass man mit ihnen einen bekannten Gegenstand mit bekannter Geometrie und in den Aufnahmen leicht zu identifizierenden Merkmalen in mehreren Posen aufnimmt und mit in einer Bündelausgleichsrechnung die Aufnahmeeinrichtungsparameter, vorzugsweise Kameraparameter, wie z. B. die Lage des Projektionszentrums, die räumliche Ausrichtung und gegebenenfalls weitere Parameter, als freie Parameter behandelt und außerdem die räumlichen Lageparameter der Posen des bekannten Gegenstandes mit seinen räumlichen Freiheitsgraden als freie Parameter behandelt. Man berechnet mit den jeweiligen veränderlichen Aufnahmeeinrichtungsparametern, vorzugsweise Kameraparametern, und Parametern der räumlichen Lage des gesamten Gegenstands und den damit zusammenhängenden relativen Lagen der einzelnen identifizierbaren Punkte die Abweichungen der beobachteten Lagen der in allen Aufnahmeeinrichtungssichten, vorzugsweise Kamerasichten, identifizierten Punkte von ihren berechneten Lagen in der gleichen Situation beim jeweiligen Stand aller Parameter des Minimierungsproblems. Man minimiert dann z. B eine Summe der Quadrate dieser Abweichungen der rekonstruierten Positionen von den in den Aufnahmeeinrichtungssichten, vorzugsweise Kamerasichten, gemessenen Positionen. Zweckmäßig kann man bei diesem Minimierungsproblem die Punkte in den Aufnahmeeinrichtungssichten, vorzugsweise Kamerasichten, mit Gewichten (Zahlen >= 0) versehen, so dass man eine Summe der gewichteten quadratischen Abweichungen minimiert. In die verwendete Gewichtung kann auch eingehen, wie gut die jeweiligen Punkte in den Aufnahmeeinrichtungssichten, vorzugsweise Kamerasichten, identifiziert sind: Punkte, deren Lage sehr gut bestimmt ist, bekommen dann ein höheres Gewicht, als solche, die in einem Aufnahmeeinrichtungsbild, vorzugsweise Kamerabild z. B. wegen Abschattung, Unschärfe und anderen Dingen nicht so deutlich zu lokalisieren sind.

Der Abschnitt des Gegenstands, in dem der wenigstens eine zu bestimmende Punkt angeordnet ist, kann die erste optisch wirksame Fläche oder ein Teil der ersten optisch wirksamen Fläche sein. Es ist aber auch möglich, dass der Abschnitt des Gegenstands, in dem der wenigstens eine Punkt angeordnet ist, die zweite optisch wirksame Fläche oder ein Teil der zweiten optisch wirksamen Fläche ist. Insbesondere ist es möglich, dass der Abschnitt des Gegenstands, in dem der wenigstens eine Punkt angeordnet ist, in dem Inneren des Gegenstands liegt. Im letzteren Fall sind der Brechungsindex sowie die Topographie der der wenigstens einen Kamera zugewandten optisch wirksamen Fläche des Gegenstands, insbesondere der Linse, zu berücksichtigen.

Die Erfindung erstreckt sich auch auf ein Verfahren für das Ermitteln der Topografie wenigstens eines Abschnitts einer optisch wirksamen Fläche eines Gegenstands, insbesondere einer Linse, z. B. eines Brillenglases, eines Brillenglasrohlings oder eines Brillenglashalbfabrikats, der eine erste optisch wirksame Fläche und eine zweite optisch wirksame Fläche hat. Hier wird die Lage einer Vielzahl von Punkten auf oder in dem Gegenstand mit dem vorstehend angegebenen Verfahren ermittelt und es wird die Topografie des wenigstens einen Abschnitts der optisch wirksamen Fläche des Gegenstands aus der ermittelten Lage der Vielzahl von Punkten berechnet.

Die Formulierung des Bestimmens der Lage wenigstens eines Punkts wird im Folgenden oft verwendet. Mit den hier beschriebenen Methoden wird dabei regelmäßig nicht nur ein Punkt der optischen Fläche bestimmt, sondern viele Punkte, oft sogar sehr viele Punkte. Den Ausgangspunkt dieser Erfindung bildet die Aufgabe, nur einen oder wenige Punkte auf dem Brillenglas zu bestimmen, um die restliche Fläche dann z. B. nach dem in der DE 10 2013 208 091 A1 beschriebenen Verfahren flächendeckend zu bestimmen.

Indem die Punkte aus der Vielzahl von Punkten, deren Lage ermittelt wurde, aufgrund der ermittelten Lage als auf der ersten optisch wirksamen Fläche oder der zweiten optisch wirksamen Fläche liegende Flächenpunkte qualifiziert werden, ist es möglich, die Topografie des Gegenstands zumindest approximativ anzugeben. Eine Idee der Erfindung ist es, dass das Qualifizieren von Punkten als Flächenpunkte mittels Bündelausgleichsrechnung erfolgt. Darüber hinaus ist es eine Idee der Erfindung, dass aus der ermittelten Lage der Vielzahl von Punkten Ausgleichsflächen berechnet werden. Zu bemerken ist, dass diese Ausgleichsflächen nicht die jeweilige Fläche in ihrer Gänze beschreiben müssen. Es ist ausreichend, wenn die ganze Fläche mit kleinen Umgebungen überdeckt wird, wobei in einer jeden dieser Umgebungen eine lokale Approximationsfläche definiert wird, die in den Überlappungsbereichen mit den benachbarten Umgebungen der Überdeckung ausreichend gut zueinander passen. "Ausreichend gut" kann sich z. B. daran bemessen, dass die maximale Abweichung dieser Funktionen untereinander in den Überlappungsbereichen kleiner als eine vorgegebene Schwelle ist, z. B. kleiner als 0,5 µm. Als ein Kriterium für das ausreichend gute Zueinanderpassen der lokalen Approximationsflächen und der benachbarten Umgebungen der Überdeckungen in den Überlappungsbereichen eignen sich allerdings auch integrale Abweichungskriterien anstelle von absoluten Abweichungskriterien. Bei dem Berechnen der Topografie des wenigstens einen Abschnitts der optisch wirksamen Fläche des Gegenstands ist insbesondere das Brechungsgesetz zu berücksichtigen, wenn es um Punkte auf der den Kameras gegenüberliegenden optisch wirksamen Fläche geht.

Die Erfindung erstreckt sich auch auf ein Computerprogramm für das Ausführen des vorstehend angegebenen Verfahrens.

Eine erfindungsgemäße Vorrichtung für das Ermitteln der Lage wenigstens eines Punkts (P) auf oder in einem transparenten Gegenstand, der eine erste optisch wirksame Fläche und eine zweite optisch wirksame Fläche hat, in einem vorzugsweise zu einer Halteeinrichtung für den Gegenstand ortsfesten Koordinatensystem, insbesondere einer Linse, z. B. eines Brillenglases, eines Brillenglasrohlings oder eines Brillenglashalbfabrikats, ist definiert durch Anspruch 7. Vorzugsweise werden Retroreflektoren mit möglichst kleinen Strukturen zum Einsatz gebracht, bei denen auch kleinere seitliche Versatze auftreten können.

Bei einer Ausführungsform der Erfindung kann innerhalb der Vorrichtung an Stelle des zu einer Halteeinrichtung für den Gegenstand ortsfesten Koordinatensystems auch ein beliebig anderes Koordinatensystem gewählt werden. Dieses beliebig andere Koordinatensystem kann beispielsweise an der Aufnahmeeinrichtung, vorzugsweise Kamera, der Retroreflektoreinrichtung, der Beleuchtungseinrichtung etc. liegen.

Die Aufnahmeeinrichtung kann für das Aufnehmen eines ersten Bilds eines Abschnitts des Gegenstands in einer zu der Halteeinrichtung referenzierten ersten Aufnahmeposition aus einer ersten Aufnahmerichtung eine erste Kamera enthalten und für das Aufnehmen wenigstens eines weiteren Bilds eines Abschnitts des Gegenstands in wenigstens einer von der ersten Aufnahmeposition verschiedenen, zu der Halteeinrichtung referenzierten weiteren Aufnahmeposition aus wenigstens einer von der ersten Aufnahmerichtung verschiedenen weiteren Aufnahmerichtung wenigstens eine weitere Kamera enthalten.

Bei der erfindungsgemäßen Vorrichtung ist vorgesehen, dass es wenigstens eine erste Aufnahmeeinrichtung für das Aufnehmen eines ersten Bilds eines Abschnitts des Gegenstands gibt, in dem ein Bildpunkt des wenigstens eines Punkts angeordnet ist, in einer zu der Halteeinrichtung referenzierten ersten Aufnahmeposition aus einer ersten Aufnahmerichtung mit einem ersten Abbildungsstrahlengang. Bei dieser Vorrichtung gibt es weiterhin eine weitere Aufnahmeeinrichtung für das Aufnehmen wenigstens eines weiteren Bilds des Abschnitts des Gegenstands, in dem ein Bildpunkt des wenigstens einen Punkts angeordnet ist, in wenigstens einer von der ersten Aufnahmeposition verschiedenen zu der Halteeinrichtung referenzierten weiteren Aufnahmeposition aus wenigstens einer von der ersten Aufnahmerichtung verschiedenen weiteren Aufnahmerichtung mit einem weiteren Abbildungsstrahlengang. Eine solche Vorrichtung enthält dann wenigstens eine erste Beleuchtungseinrichtung für das Beaufschlagen des Gegenstands mit in Bezug auf den ersten Abbildungsstrahlengang koaxialem Beleuchtungslicht in der ersten Aufnahmerichtung und für das Beaufschlagen des Gegenstands mit in Bezug auf den weiteren Abbildungsstrahlengang koaxialem Beleuchtungslicht in der weiteren Aufnahmerichtung. Die Retroreflektoreinrichtungen mit einem Retroreflektor, der das den Gegenstand durchsetzende Beleuchtungslicht in sich selbst zurückreflektiert, sind zweckmäßig so ausgelegt, dass sie für mehrere Beleuchtungs- und Aufnahmeeinrichtungen wirksam sind. Dabei sind diese verlagerbar, so dass in einer ersten Stellung das den Gegenstand durchsetzende Beleuchtungslicht auf einer der ersten oder der zweiten optisch wirksamen Fläche zugewandten Seite für eine Aufnahmeeinrichtung in sich selbst zurückreflektiert und der in einer von der ersten Einstellung verschiedenen weiteren Stellung das den Gegenstand durchsetzende Beleuchtungslicht für andere Aufnahmeeinrichtungen in sich selbst zurückreflektiert wird.

Die Aufnahmeeinrichtung, vorzugsweise Kamera, enthält für das Aufnehmen eines ersten Bilds eines Abschnitts des Gegenstands in einer vorzugsweise zu der Halteeinrichtung referenzierten ersten Aufnahmeposition aus einer ersten Aufnahmerichtung eine der ersten optisch wirksamen Fläche zugewandte erste Kamera und für das Aufnehmen wenigstens eines weiteren Bilds eines Abschnitts des Gegenstands in wenigstens einer von der ersten Aufnahmeposition verschiedenen, vorzugsweise zu der Halteeinrichtung referenzierten weiteren Aufnahmeposition aus wenigstens einer von der ersten Aufnahmerichtung verschiedenen weiteren Aufnahmerichtung wenigstens eine der ersten optisch wirksamen Fläche zugewandte weitere Kamera, wobei die Aufnahmeeinrichtung, vorzugsweise Kamera, für das Aufnehmen eines weiteren Bilds eines Abschnitts des Gegenstands in einer vorzugsweise zu der Halteeinrichtung referenzierten ersten Aufnahmeposition aus einer ersten Aufnahmerichtung eine der ersten optisch wirksamen Fläche zugewandte weitere Aufnahmeeinrichtung, vorzugsweise Kamera, enthält und für das Aufnehmen wenigstens eines weiteren Bilds eines Abschnitts des Gegenstands in wenigstens einer von der ersten Aufnahmeposition verschiedenen, vorzugsweise zu der Halteeinrichtung referenzierten weiteren Aufnahmeposition aus wenigstens einer von der ersten Aufnahmerichtung verschiedenen weiteren Aufnahmerichtung wenigstens eine der zweiten optisch wirksamen Fläche zugewandte weitere Aufnahmeeinrichtung, vorzugsweise Kamera, enthält, wobei die Beleuchtungseinrichtung für das Beaufschlagen des Gegenstands in der jeweils ersten Aufnahmerichtung und in der jeweils wenigstens einen weiteren Aufnahmerichtung mit Beleuchtungslicht ausgelegt ist, und wobei die Reflektoreinrichtung einen verlagerbar angeordneten ersten Retroreflektor aufweist, der in einer ersten Stellung das den Gegenstand durchsetzende Beleuchtungslicht auf einer der zweiten optisch wirksamen Fläche zugewandten Seite in sich selbst zurückreflektiert und der in einer von der ersten Einstellung verschiedenen weiteren Stellung das den Gegenstand durchsetzende Beleuchtungslicht freigibt, und die Reflektoreinrichtung einen verlagerbar angeordneten zweiten Retroreflektor aufweist, der in einer ersten Stellung das den Gegenstand durchsetzende Beleuchtungslicht auf einer der ersten optisch wirksamen Fläche zugewandten Seite in sich selbst zurückreflektiert und der in einer von der ersten Einstellung verschiedenen weiteren Stellung das den Gegenstand durchsetzende Beleuchtungslicht freigibt.

Die Erfindung erstreckt sich auch auf ein System für das Ermitteln der räumlichen Struktur eines transparenten Gegenstands, insbesondere einer Linse, z. B. eines Brillenglases, eines Brillenglasrohlings oder eines Brillenglashalbfabrikats, der eine erste optisch wirksame Fläche und eine zweite optisch wirksame Fläche hat. Ein solches System umfasst eine Halteeinrichtung für den Gegenstand und enthält eine Messstation für das Bestimmen der Topografie der ersten optisch wirksamen Fläche des Gegenstands. In dem System gibt es eine vorstehend angegebene Vorrichtung für das Ermitteln der Lage wenigstens eines Punkts (P) auf der ersten optisch wirksamen Fläche in einem vorzugsweise zu der Halteeinrichtung ortsfesten Koordinatensystem. Das erfindungsgemäße System enthält eine Rechnereinheit für das Berechnen der räumlichen Struktur des Gegenstands aus der Topografie der ersten optisch wirksamen Fläche, aus der Lage wenigstens eines Punkts P auf der ersten optisch wirksamen Fläche in einem vorzugsweise zu der Halteeinrichtung ortsfesten Koordinatensystem und aus einem vorzugsweise zu dem ortsfesten Koordinatensystem der Halteeinrichtung referenzierten Datensatz über die Topografie der zweiten optisch wirksamen Fläche. Die Messstation kann, wie z. B. in WO 2014/177632 A1 offenbart, eine Vielzahl von Punktlichtquellen aufweisen, die Licht bereitstellen, das an der zu vermessenden optisch wirksamen Fläche eines in dem Aufnahmebereich angeordneten Gegenstands reflektiert wird. Die Messstation enthält dann wenigstens eine Kamera für das Erfassen einer Helligkeitsverteilung, die von dem an der zu vermessenden optisch wirksamen Fläche reflektierten Licht der Punktlichtquellen auf einem Bildsensor hervorgerufen wird. Alternativ oder zusätzlich hierzu ist es auch möglich, dass die Messstation die Topografie der ersten optisch wirksamen Fläche des Gegenstands mit einer nach dem Prinzip der Streifenprojektion oder der Musterprojektion arbeitenden Messmethode bestimmt.

Die Erfindung erstreckt sich außerdem auf die Verwendung einer vorstehend angegebenen Vorrichtung oder eines vorstehend angegebenen Systems für die Qualitätsüberwachung in einer Brillenglas-Fertigungseinrichtung.

Im Folgenden wird die Erfindung anhand der in der Zeichnung in schematischer Weise dargestellten Ausführungsbeispiele näher erläutert.

Es zeigen:
- Fig. 1: eine beispielhafte, nicht erfindungsgemäße Vorrichtung für das Ermitteln der Lage wenigstens eines Punkts auf oder in einer Linse;
- Fig. 2: eine erfindungsgemäße Vorrichtung für das Ermitteln der Lage wenigstens eines Punkts auf oder in einer Linse; und
- Fig. 3: ein beispielhaftes, nicht erfindungsgemäßes System für das Ermitteln der räumlichen Struktur einer Linse mit einer Vorrichtung für das Ermitteln der Lage wenigstens eines Punkts auf der Linse.

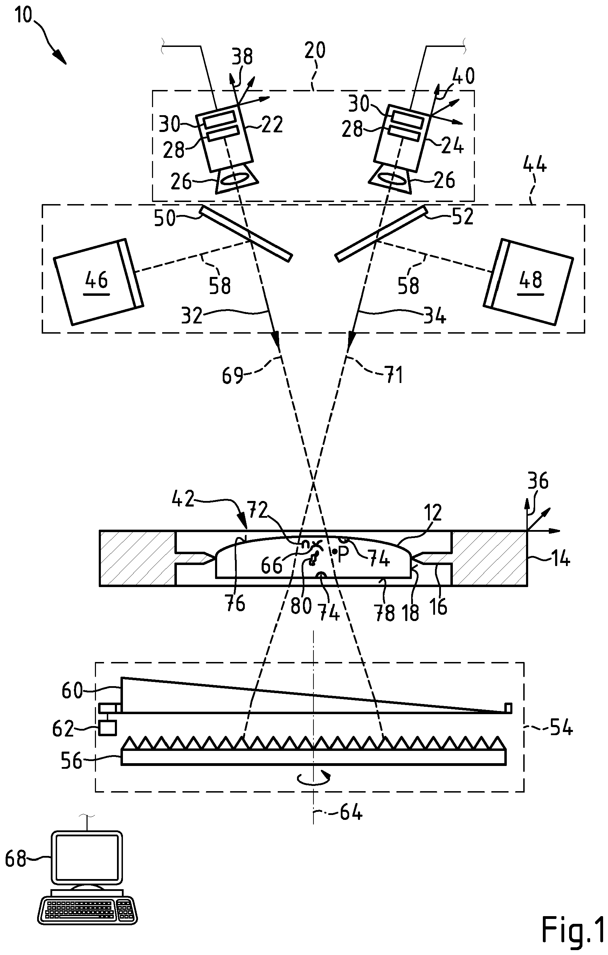

Die in der Fig. 1 gezeigte Vorrichtung 10 ist für das Ermitteln der Lage von Punkten P auf oder in einem Gegenstand 12 in Form einer Linse ausgelegt. Die Linse 12 ist in der Vorrichtung 10 in einer Halteeinrichtung 14 aufgenommen. Die Halteeinrichtung 14 weist Halteorgane 16 auf, mittels derer die Linse 12 an ihrem seitlichen Rand 18 gehalten werden kann.

Die Vorrichtung 10 enthält eine Aufnahmeeinrichtung 20 mit einer ersten Kamera 22 und mit einer zweiten Kamera 24. Die erste Kamera 22 und die zweite Kamera 24 hat jeweils ein Objektiv 26 und einen flächigen Bildsensor 28, der an eine Bilderfassungsstufe 30 angeschlossen ist. Die erste Kamera 22 und die zweite Kamera 24 ermöglicht das Aufnehmen von Bildern der Linse 12 in zwei voneinander verschiedenen Aufnahmerichtungen 32, 34. Die Aufnahmerichtungen 32, 34 entsprechen der Lage der optischen Achsen der Objektive 26 der ersten Kamera 22 und der zweiten Kamera 24. Die Aufnahmeposition der ersten Kamera 22 und die Aufnahmeposition der zweiten Kamera 24 ist vorzugsweise zu der Halteeinrichtung 14 der Vorrichtung 10 exakt referenziert. D. h., die räumliche Lage eines vorzugsweise zu der Halteeinrichtung 14 ortsfesten Koordinatensystems 36 ist in einem zu dem Bildsensor 28 der ersten Kamera 22 und der zweiten Kamera 24 jeweils ortsfesten Koordinatensystem 38, 40 bekannt. Die erste Kamera 22 und die zweite Kamera 24 ermöglichen es jeweils, einen räumlich ausgedehnten Objektbereich 42 zu erfassen, in dem die Linse 12 angeordnet ist.

In der Vorrichtung 10 gibt es eine Beleuchtungseinrichtung 44 für das Beaufschlagen der Linse 12 in der ersten Aufnahmerichtung 32 und in der wenigstens einen weiteren Aufnahmerichtung 34 mit Beleuchtungslicht 58. Die Beleuchtungseinrichtung 44 hat hierzu eine erste Beleuchtungslichtquelle 46 und eine zweite Beleuchtungslichtquelle 48, die das Beleuchtungslicht 58 mit einem divergenten Beleuchtungsstrahlengang bereitstellen, das jeweils mittels eines von den optischen Achsen des Objektivs 26 der ersten Kamera 22 und der zweiten Kamera 24 durchsetzten Strahlteilers 50, 52 auf die in der Halteeinrichtung 14 angeordnete Linse 12 gelenkt wird. Zweckmäßigerweise entspringt das Licht vermöge des Stahlteilers scheinbar aus einer Position, die in der Eintrittspupille der Linse liegt, die insbesondere ein Brillenglas sein kann.

Das von der ersten Beleuchtungslichtquelle 46 bereitgestellte Beleuchtungslicht 58 wird dabei mit einem zu der optischen Achse des der ersten Kamera 22 zugeführten Abbildungsstrahlengangs 69 koaxialen Beleuchtungsstrahlengang auf die Linse 12 geführt. Entsprechend gelangt das von der zweiten Beleuchtungslichtquelle 48 bereitgestellte Beleuchtungslicht 58 mit einem zu der optischen Achse des der zweiten Kamera 24 zugeführten Abbildungsstrahlengangs 71 koaxialen Beleuchtungsstrahlengang auf die Linse 12. Das mit dem Beleuchtungslicht der ersten Beleuchtungslichtquelle 46 auf und in der Linse 12 erzeugte Leuchtfeld überlappt dabei mit dem Leuchtfeld, das von dem Beleuchtungslicht der zweiten Beleuchtungslichtquelle 48 auf oder in der Linse 12 erzeugt wird. Die Aufgabe des Retroreflektors ist es, sicherzustellen, dass das Licht der ersten Beleuchtungslichtquelle 46 nur zu der ersten Kamera 22 gelangt und das Licht der zweiten Beleuchtungslichtquelle 48 nur zu der zweiten Kamera gelangt. Zu bemerken ist, dass dies allerdings nur mit einem sogenannten idealen Retroreflektor erreicht werden kann.

Die Vorrichtung 10 weist eine Retroreflektoreinrichtung 54 auf. Die Retroreflektoreinrichtung 54 enthält einen Retroreflektor 56, der das Beleuchtungslicht 58, welches die Linse 12 durchsetzt und das auf den Retroreflektor 56 gelangt, in sich selbst zurückreflektiert. Die Retroreflektoreinrichtung 54 umfasst ein zwischen der Halteeinrichtung 14 und dem Retroreflektor 56 angeordnetes keilförmiges Prisma 60. Das Prisma 60 ist drehbeweglich gelagert und kann mittels einer Antriebseinrichtung 62 um eine Drehachse 64 kontinuierlich mit einer großen Winkelgeschwindigkeit rotiert werden. Zweck des Prismas 60 ist es, die internen Strukturen des Retroreflektors 56 in den aufgenommenen Bildern zu verwischen und dadurch zu eliminieren.

Die Bilderfassungsstufe 30 der ersten Kamera 22 und die Bilderfassungsstufe 30 der zweiten Kamera 24 ist jeweils mit einer Rechnereinheit 68 verbunden. Die Rechnereinheit 68 enthält ein Computerprogramm, das die mit der ersten Kamera 22 und mit der zweiten Kamera 24 aufgenommenen Bilder korreliert und in einer photogrammetrischen Bilddatenverarbeitungsroutine die räumliche Lage von einander entsprechenden Punkten P in mit der ersten Kamera 22 und mit der zweiten Kamera 24 erfassten Strukturen 66 auf oder in der Linse 12 mittels Triangulation berechnet und in den Koordinaten des Koordinatensystems 36 der Halteeinrichtung 14 angibt.

Das mittels der Bildsensoren 28 der ersten Kamera 22 und der zweiten Kamera 24 erfasste Bild der mit der Beleuchtungseinrichtung 44 beleuchteten Linse 12 visualisiert insbesondere darauf angebrachte Markierungen 72 und Defekte 74 an dessen optisch wirksamen Oberflächen 76, 78. In dem erfassten Bild sind auch in dem Volumen der Linse 12 ausgebildete Schlieren 80 zu erkennen.

Schlieren 80 im Volumen einer Linse 12 zeigen sich als ausgedehnte Strukturen, die sich von Strukturen unterscheiden, die es an den optisch wirksamen Flächen 76, 78 einer Linse 12 gibt. Die Strukturen an den optisch wirksamen Flächen 76, 78 eines Brillenglases 12 sind typischerweise Polierstrukturen, die eine punkt- oder linienförmige Charakteristik haben können.

Fertigungstechnisch bedingt sind bei einer Linse 12 in aller Regel neben den darauf angebrachten Markierungen 72 Polierstrukturen und Bearbeitungsmarken anzutreffen. Insbesondere Polierstrukturen gibt es fast auf jeder polierten Fläche. Polierstrukturen wirken sich nur dann auf die optischen Eigenschaften einer Linse 12 nachteilhaft aus, wenn ihre Größe eine bestimmte Grenze überschreitet. Typische Muster von Polierstrukturen sind kurze Geraden- oder Kurvensegmente mit sehr feinen Linien, die über die optisch wirksamen Flächen verteilt sind. Die Geraden- oder Kurvensegmente von Polierstrukturen können insbesondere Kreuzungen oder annähernd-Kreuzungen ausbilden. Aufgrund ihrer Lage und Größe sowie der Krümmung und den Krümmungsverhältnissen in dem mittels der ersten Kamera 22 und der zweiten Kamera 24 erfassten Brillenglasbild können insbesondere Polierstrukturen mittels Bildverarbeitung erkannt und in der photogrammetrischen Bilddatenverarbeitungsroutine des Computerprogramms in der Rechnereinheit 68 voneinander unterschieden werden. Durch das Verarbeiten der mit der ersten und zweiten Kamera 22, 24 in der Vorrichtung 10 erfassten Bilddaten ist es somit möglich, aufgrund von Lage und Größe Defekte 74, Schlieren 80 und Markierungen 72 zu erkennen, voneinander zu unterscheiden und deren Ort in dem Koordinatensystem 36 der Halteeinrichtung 14 anzugeben.

Zu bemerken ist, dass mittels der Vorrichtung 10 auch die Lage von Punkten in Strukturen auf einer optisch wirksamen Fläche der Linse 12 bestimmt werden kann, die mittels Lasergravur, Drucken oder auf andere Weise erzeugt werden. Es können mit der Vorrichtung 10 allerdings grundsätzlich auch die Lage von Punkten in Strukturen in Form von an einer Linse angelagerter Partikel, Staubkörner, Fingerabdrücken bestimmt werden.

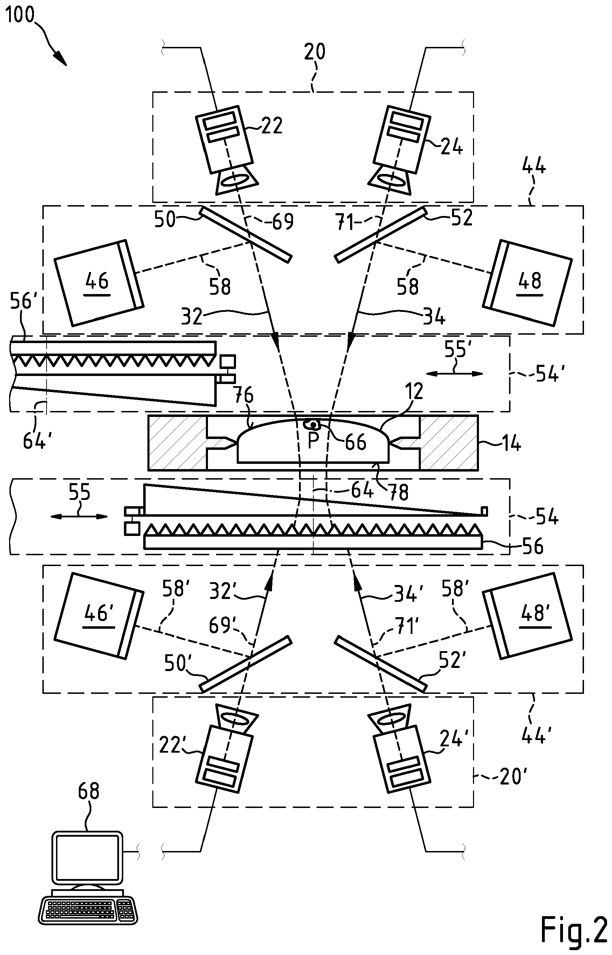

Die Fig. 2 zeigt eine weitere Vorrichtung 100 für das Ermitteln der Lage von Punkten P auf einer Struktur 66 auf oder in einer Linse 12. Soweit in der Fig. 2 gezeigte Baugruppen und Elemente den in der Fig. 1 gezeigten Baugruppen und Elementen entsprechen, sind diese durch die gleichen Zahlen als Bezugszeichen kenntlich gemacht.

Die Vorrichtung 100 hat eine erste Aufnahmeeinrichtung 20 mit einer Kamera 22 und einer weiteren Kamera 24, die jeweils einer ersten optisch wirksamen Fläche 76 der Linse 12 zugewandt sind und die für das Aufnehmen von Bildern der Linse 12 in zwei voneinander verschiedenen Aufnahmerichtungen 32, 34 dienen. In der Vorrichtung 100 gibt es eine weitere Aufnahmeeinrichtung 20' mit einer Kamera 22' und einer Kamera 24', die der optisch wirksamen Fläche 78 der Linse 12 zugewandt sind und die für das Aufnehmen von Bildern der Linse 12 in zwei weiteren, voneinander verschiedenen Aufnahmerichtungen 32', 34' dienen.

In der Vorrichtung 100 gibt es eine erste Beleuchtungseinrichtung 44 und eine weitere Beleuchtungseinrichtung 44'. Die erste Beleuchtungseinrichtung 44 stellt Beleuchtungslicht 58 bereit, das mit einem zu dem der ersten Kamera 22 bzw. der zweiten Kamera 24 zugeführten Abbildungsstrahlengang 69, 71 koaxialen Beleuchtungsstrahlengang auf die Linse 12 geführt wird. Entsprechend erzeugt die zweite Beleuchtungseinrichtung 44' Beleuchtungslicht 58', das in einem zu dem der ersten Kamera 22' bzw. der zweiten Kamera 24' in der weiteren Aufnahmeeinrichtung 20' zugeführten Abbildungsstrahlengang 69', 71' koaxialen Beleuchtungsstrahlengang auf die Linse 12 geführt wird.

Die Vorrichtung 100 hat eine erste Retroreflektoreinrichtung 54 mit einem entsprechend dem Doppelpfeil 55 verlagerbar angeordneten ersten Retroreflektor 56 und eine weitere Reflektoreinrichtung 54' mit einem entsprechend dem Doppelpfeil 55' verlagerbar angeordneten weiteren Retroreflektor 56'. Der erste Retroreflektor 56 kann um eine Drehachse 64 mit einer hohen Winkelgeschwindigkeit rotiert werden und reflektiert in einer ersten Einstellung das Beleuchtungslicht 58, welches die Linse 12 durchsetzt, auf einer der zweiten optisch wirksamen Fläche 78 zugewandten Seite in sich selbst zurück. In einer von der ersten Einstellung verschiedenen weiteren Einstellung gibt der erste Retroreflektor 56 das die Linse 12 durchsetzende Beleuchtungslicht 58' frei. Der weitere Retroreflektor 56' ist ebenfalls mit einer hohen Winkelgeschwindigkeit um eine Drehachse 64' rotierbar. Die weitere Retroreflektoreinrichtung 54' mit dem weiteren Retroreflektor 56' reflektiert in dieser weiteren Einstellung das Beleuchtungslicht 58', welches die Linse 12 durchsetzt, auf einer der ersten optisch wirksamen Fläche 76 zugewandten Seite in sich selbst zurück. In der ersten, von dieser weiteren Einstellung verschiedenen Einstellung gibt der weitere Reflektor 56' dagegen das Beleuchtungslicht 58 frei, welches die Linse 12 durchsetzt.

Zu bemerken ist, dass die Rechnereinheit 68 der in den Fig. 1 und Fig. 2 gezeigten Vorrichtungen 10, 100 auch eine Programmroutine für das Ermitteln der Topografie der Linse 12 enthalten kann, die aus der ermittelten Lage einer Vielzahl von Punkten P auf einer optisch wirksamen Fläche 76, 78 die Topografie dieser Fläche berechnet. Dabei werden aus der Vielzahl von Punkten P, deren Lage ermittelt wurde, aufgrund der ermittelten Lage als auf der ersten optisch wirksamen Fläche oder der zweiten optisch wirksamen Fläche liegend qualifiziert. Das Qualifizieren von Punkten als Flächenpunkte erfolgt z. B. mittels Bündelausgleichsrechnung. Punkte, die auf der den Kameras abgewandten Seite liegen, ergeben rekonstruierte Punkte, die nicht gut zueinander in den Sichten der Kameras passen. Wenn man aber die Sichtstrahlen dieser Punkte, die zu grundsätzlich unsicher rekonstruierten Punkten führen, mit Hilfe des Brechungsgesetzes weiterverfolgt, ergeben diese Sichtstrahlen Rekonstruktionspunkte, die besser zueinander passen. Punkte, deren Rekonstruktionsunschärfe nach Weiterverfolgung deutlich besser wird, liegen auf der den Kameras abgewandten Seite. Für die rechnerische Anwendung des Brechungsgesetzes ist grundsätzlich die Kenntnis der Lage einer durch Rekonstruktionspunkte definierten Ausgleichsfläche auf der den Kameras zugewandten Linsenfläche erforderlich. Es ist allerdings ausreichend, wenn jeweils für kleine Umgebungen der Fläche derartige lokale Rekonstruktionsflächen vorliegen (Beschreibung durch lokale Flächenkeime).

Alternativ oder zusätzlich können hier aus der ermittelten Lage der Vielzahl von Punkten auch Ausgleichsflächen berechnet werden.

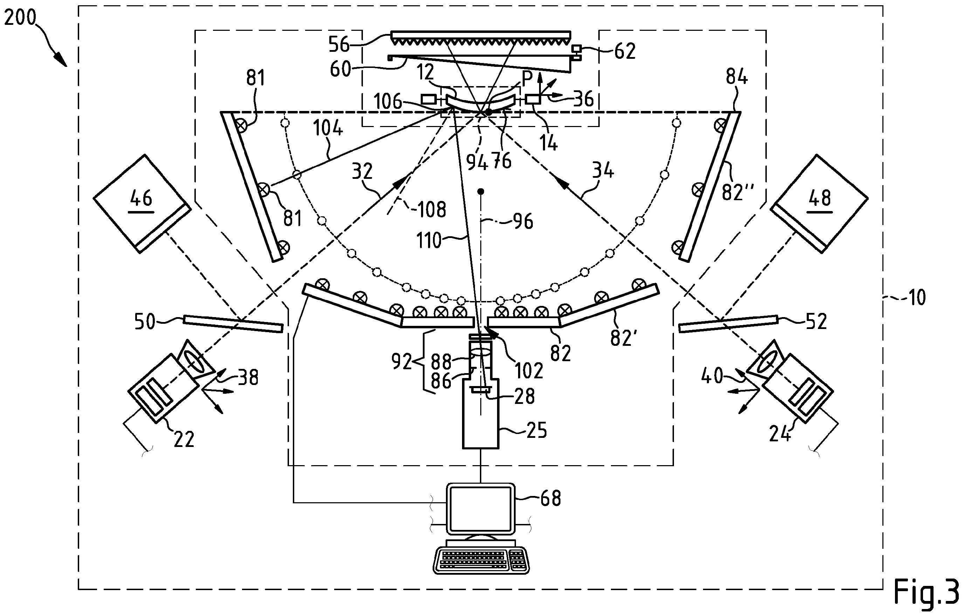

Die Fig. 3 zeigt ein System 200 für das Ermitteln der räumlichen Struktur einer Linse 12 mit einer Vorrichtung 10 für das Ermitteln der Lage wenigstens eines Punkts P auf der Linse 12.

Das System 200 hat eine Halteeinrichtung 14, in der die Linse 12 aufgenommen werden kann. In dem System 200 gibt es eine Messstation mit einer Vielzahl von Punktlichtquellen 81 in Form von Leuchtdioden (LEDs), die bei Aktivieren Licht im ultravioletten Spektralbereich (z. B. UV-Licht mit der Wellenlänge λ = 365 nm) emittieren. Diese Leuchtdioden sind als SMDs (surface mounted device) ausgebildet und auf Leiterplatten 82, 82', 82" angeordnet, die zu einer Trägerstruktur 84 zusammengefügt sind.

In dem System 200 können grundsätzlich auch metallische Oberflächen sowie lackierte Oberflächen vermessen werden, wobei in diesem Fall das Licht der Punktlichtquellen günstiger Weise im sichtbaren Spektralbereich liegt.

Das System 200 enthält eine Kamera 25 mit einem eine Blende 86, ein Objektiv 88 und ein Abbildungssystem 92. Das optische Abbildungssystem 92 hat eine den Aufnahmebereich 94 durchsetzende optische Achse 96. Die Kamera 25 ist auf der dem Aufnahmebereich 94 abgewandten Seite der Trägerstruktur 84 angeordnet. Sie erfasst ein in dem Aufnahmebereich 94 angeordnete Linse 12 durch eine Ausnehmung 102 in der Leiterplatte 82 der Trägerstruktur 84. Die Kamera 25 dient für das Erfassen einer Helligkeitsverteilung, die von dem an der optisch wirksamen Fläche 76 reflektierten Licht der Punktlichtquellen 81 auf dem Bildsensor 28 hervorgerufen wird. Das Licht von einer Punktlichtquelle 81 gelangt mit dem Lichtstrahl 104 auf die optisch wirksame Fläche 76 der in dem Aufnahmebereich 94 angeordneten Linse 12. An dem Punkt 106 mit den Koordinaten (Xs, Ys, Zs) wird das Licht mit dem Einfallswinkel ß_{E} in Bezug auf die Oberflächennormale 108 der optisch wirksamen Fläche an dem Punkt 106 gemäß dem Reflexionsgesetz unter dem Ausfallswinkel ß_{A} = ß_{E} reflektiert.

Die Helligkeitsverteilung auf dem Bildsensor 28 der Kamera 25 enthält damit die Information der Neigung der Tangentialebenen an der zu vermessenden optisch wirksamen Fläche 76 der Linse 12 an denjenigen Stellen, an denen das Licht der Punktlichtquellen 81 so reflektiert wird, dass es die Kamera 25 einfängt.

Das Abbildungssystem 92 der Kamera 25 ist so eingestellt, dass eine auf dem Bildsensor 28 erfasste Helligkeitsverteilung durch die Ausnehmung 102 keine Vignettierung erfährt und die Schärfentiefe so groß ist, dass die Helligkeitsverteilungen für in dem System 200 vermessene optisch wirksamen Flächen der Linse 12, die unterschiedliche Oberflächentopografien haben, auf dem Bildsensor 28 aufgelöst werden können.

Das System 200 enthält eine Rechnereinheit 68, die als eine Einrichtung für das Aktivieren von unterschiedlichen Punktlichtquellen 81 und das Erfassen der Helligkeitsverteilung für die Punktlichtquellen 81 dient. Für das Auswerten einer mit dem Bildsensor 28 in der Kamera 25 erfassten Helligkeitsverteilung enthält die Rechnereinheit 68 ein Computerprogramm. Das Computerprogramm berechnet für einen mit der Kamera 25 auf dem Bildsensor 28 erfassten Lichtstrahl 110 von einem Punkt P auf der optisch wirksamen Fläche 76 der in dem Aufnahmebereich 94 angeordneten Linse 12 und den bekannten Positionen der Punktlichtquellen 81 in der Vorrichtung 10 die Oberflächennormale 108 in einem beobachteten Reflexionspunkt. Durch Integration und Interpolation werden dann anhand der bekannten Koordinaten wenigstens eines Punkts P auf der optisch wirksamen Fläche 76 aufgrund von Reflexionen des Lichts der Punktlichtquellen 81 an dieser Fläche erfasste Oberflächennormalen 108 berechnet. Das hierzu verwendete Computerprogramm in der Rechnereinheit 68 ermöglicht dabei auch das Berechnen der lokalen Brechkräfte der optisch wirksamen Fläche 76 aus den ermittelten Oberflächennormalen 108 bzw. aus der berechneten Topografie.

Die Vorrichtung 10 in dem System 200 dient dazu, die Koordinaten wenigstens eines Punkts P auf der optisch wirksamen Fläche 76 der Linse 12 in einem Koordinatensystem anzugeben, das zu dem Koordinatensystem der Halteeinrichtung und damit zu dem Bildsensor 28 der Kamera 25 referenziert ist.

Die Vorrichtung 10 hat den vorstehend anhand der Fig. 1 beschriebenen Aufbau. Soweit in der Fig. 3 gezeigte Baugruppen und Elemente den in der Fig. 1 gezeigten Baugruppen und Elementen entsprechen, sind diese durch die gleichen Zahlen als Bezugszeichen kenntlich gemacht.

Die vorstehend beschriebenen Vorrichtungen und das vorstehend beschriebene System eignen sich insbesondere für den Einsatz in der Qualitätsüberwachung von Brillengläsern in einer Brillenglasfertigungseinrichtung.

Zusammenfassend sind insbesondere folgende bevorzugte Merkmale der Erfindung festzuhalten: Für das Ermitteln der Lage wenigstens eines Punkts (P) auf oder in einem Gegenstand, insbesondere einer Linse 12, z. B. einem Brillenglas, einem Brillenglasrohling oder einem Brillenglashalbfabrikat, der eine erste optisch wirksame Fläche 76 und eine zweite optisch wirksame Fläche 78 hat, in einem vorzugsweise zu einer Halteeinrichtung 14 für einen Gegenstand, insbesondere die Linse 12, ortsfesten Koordinatensystem 36 werden folgende Schritte durchgeführt: Aufnehmen eines ersten Bilds eines Abschnitts des Gegenstandes, insbesondere der Linse 12, in einer zu der Halteeinrichtung 14 referenzierten ersten Aufnahmeposition aus einer ersten Aufnahmerichtung 32 mit einem ersten Abbildungsstrahlengang, in dem der wenigstens eine Punkt angeordnet ist, wobei der Gegenstand, insbesondere die Linse 12, in der ersten Aufnahmerichtung 32 mit zu dem ersten Abbildungsstrahlengang koaxialem Beleuchtungslicht beaufschlagt wird, das den Gegenstand, insbesondere die Linse 12, durchsetzt und nach dem Durchsetzen des Gegenstands, insbesondere der Linse 12, in sich selbst zurück reflektiert wird, so dass das Beleuchtungslicht den Gegenstand, insbesondere die Linse 12, erneut durchsetzt; Aufnehmen wenigstens eines weiteren Bilds des Abschnitts des Gegenstands, insbesondere der Linse 12, in wenigstens einer von der ersten Aufnahmeposition verschiedenen weiteren zu der Halteeinrichtung 14 referenzierten Aufnahmeposition aus wenigstens einer von der ersten Aufnahmerichtung 32 verschiedenen weiteren Aufnahmerichtung 34 mit einem weiteren Abbildungsstrahlengang, in dem der wenigstens eine Punkt P angeordnet ist, wobei der Gegenstand, insbesondere die Linse 12, in der wenigstens einen weiteren Aufnahmerichtung 34 mit zu dem weiteren Abbildungsstrahlengang koaxialem Beleuchtungslicht 58 beaufschlagt wird, das den Gegenstand, insbesondere die Linse 12, durchsetzt und nach dem Durchsetzen des Gegenstands, insbesondere der Linse 12, in sich selbst zurück reflektiert wird, so dass das Beleuchtungslicht 58 den Gegenstand, insbesondere die Linse 12, erneut durchsetzt; und Rekonstruieren von Ortskoordinaten des wenigstens einen Punkts aus Bildkoordinaten des Punkts in dem ersten Bild und aus Bildkoordinaten des Punkts in dem wenigstens einen weiteren Bild.

### Bezugszeichenliste:

- 10, 100: Vorrichtung
- 12: Gegenstand, Linse
- 14: Halteeinrichtung
- 16: Halteorgan
- 18: seitlicher Rand
- 20, 20': Aufnahmeeinrichtung
- 22, 22': erste Kamera
- 24, 24': zweite Kamera
- 25: Kamera
- 26: Objektiv
- 28: Bildsensor
- 30: Bilderfassungsstufe
- 32, 32', 34, 34': Aufnahmerichtung
- 36, 38, 40: Koordinatensystem
- 42: Objektbereich
- 44,44': Beleuchtungseinrichtung
- 46,48: Beleuchtungslichtquelle
- 50, 52: Strahlteiler
- 54, 54': Retroreflektoreinrichtung
- 55, 55': Doppelpfeil
- 56, 56': Retroreflektor
- 58, 58': Beleuchtungslicht
- 60: Prisma
- 62: Antriebseinrichtung
- 64, 64': Drehachse
- 66: Struktur
- 68: Rechnereinheit
- 69, 69', 71, 71': Abbildungsstrahlengang
- 72: Markierung
- 74: Defekte
- 76, 78: optisch wirksame Flächen
- 80: Schlieren
- 81: Punktlichtquellen
- 82, 82', 82": Leiterplatte
- 84: Trägerstruktur
- 86: Blende
- 88: Objektiv
- 92: optisches Abbildungssystem
- 94: Aufnahmebereich
- 96: optische Achse
- 102: Ausnehmung
- 104: Lichtstrahl
- 106: Punkt
- 108: Oberflächennormale
- 110: Lichtstrahl
- 200: System
- P: Punkte

## Patentansprüche

1. Verfahren für das Ermitteln der Topografie wenigstens eines Abschnitts einer optisch wirksamen Fläche (76) eines Gegenstands, insbesondere einer Linse (12), der eine erste optisch wirksame Fläche (76) und eine zweite optisch wirksame Fläche (78) hat,
**gekennzeichnet durch** folgende Schritte:
Ermitteln der Lage einer Vielzahl von Punkten auf oder in dem Gegenstand, insbesondere der Linse (12), **durch**
Aufnehmen eines ersten Bilds eines Abschnitts des Gegenstands, insbesondere der Linse (12), in dem der wenigstens eine Punkt angeordnet ist, in einer vorzugsweise zu der Halteeinrichtung (14) referenzierten ersten Aufnahmeposition aus einer ersten Aufnahmerichtung (32) mit einem ersten Abbildungsstrahlengang, wobei
der Gegenstand, insbesondere die Linse (12), in der ersten Aufnahmerichtung (32) mit zu dem ersten Abbildungsstrahlengang koaxialen Beleuchtungslicht (58) beaufschlagt wird, das den Gegenstand, insbesondere die Linse (12), durchsetzt und nach dem Durchsetzen des Gegenstands, insbesondere der Linse (12), in sich selbst zurückreflektiert wird, so dass das Beleuchtungslicht (58) den Gegenstand, insbesondere die Linse (12), erneut durchsetzt;
Aufnehmen wenigstens eines weiteren Bilds des Abschnitts des Gegenstands, insbesondere der Linse (12), in dem der wenigstens eine Punkt angeordnet ist, in wenigstens einer von der ersten Aufnahmeposition verschiedenen weiteren, vorzugsweise zu der Halteeinrichtung (14) referenzierten Aufnahmeposition aus wenigstens einer von der ersten Aufnahmerichtung (32) verschiedenen weiteren Aufnahmerichtung (34) mit einem weiteren Abbildungsstrahlengang, wobei
der Gegenstand, insbesondere die Linse (12), in der wenigstens einen weiteren Aufnahmerichtung (34) mit zu dem weiteren Abbildungsstrahlengang koaxialen Beleuchtungslicht (58) beaufschlagt wird, das den Gegenstand, insbesondere die Linse (12), durchsetzt und nach dem Durchsetzen des Gegenstands, insbesondere der Linse (12), in sich selbst zurück reflektiert wird, so dass das Beleuchtungslicht (58) den Gegenstand, insbesondere die Linse (12), erneut durchsetzt; und
Rekonstruieren von Ortskoordinaten des wenigstens einen Punkts aus Bildkoordinaten des Punkts in dem ersten Bild und aus Bildkoordinaten des Punkts in dem wenigstens einen weiteren Bild,
Berechnen der Topografie des wenigstens einen Abschnitts der optisch wirksamen Fläche (76) des Gegenstands, insbesondere der Linse (12), aus der ermittelten Lage der Vielzahl von Punkten,
**dadurch gekennzeichnet,** dass
Punkte aus der Vielzahl von Punkten, deren Lage ermittelt wurde, aufgrund der ermittelten Lage als auf der ersten optisch wirksamen Fläche (76) oder der zweiten optisch wirksamen Fläche (78) liegende Flächenpunkte qualifiziert werden.

2. Verfahren nach Anspruch 1, **dadurch gekennzeichnet, dass** das Qualifizieren von Punkten als Flächenpunkte mittels Bündelausgleichsrechnung erfolgt.

3. Verfahren nach Anspruch 1 oder 2, **dadurch gekennzeichnet, dass** aus der ermittelten Lage der Vielzahl von Punkten Ausgleichsflächen berechnet werden und/oder dass bei dem Berechnen der Topografie des wenigstens einen Abschnitts der optisch wirksamen Fläche (76, 78) des Gegenstands, insbesondere der Linse (12), das Brechungsgesetz berücksichtigt wird.

4. Verfahren nach einem der Ansprüche 1 bis 3, **dadurch gekennzeichnet, dass** die Lage der wenigstens einen weiteren Aufnahmeposition zu der Lage der ersten Aufnahmeposition referenziert ist und/oder dass die Lage der wenigstens einen weiteren Aufnahmerichtung (34) zu der Lage der ersten Aufnahmerichtung (32) referenziert ist.

5. Verfahren nach einem der Ansprüche 1 bis 4, **dadurch gekennzeichnet, dass** der Abschnitt des Gegenstands, insbesondere der Linse (12), in dem der wenigstens eine Punkt angeordnet ist, die erste optisch wirksame optische Fläche (76) oder ein Teil der ersten optisch wirksamen Fläche (76) ist, oder dass der Abschnitt des Gegenstands, insbesondere der Linse (12), in dem der wenigstens eine Punkt angeordnet ist, die zweite optisch wirksame optische Fläche (78) oder ein Teil der zweiten optisch wirksamen Fläche (78) ist, oder dass der Abschnitt des Gegenstands, insbesondere der Linse (12), in dem der wenigstens eine Punkt angeordnet ist, in dem Inneren des Gegenstands, insbesondere der Linse (12), liegt.

6. Computerprogramm für das Ausführen der Verfahrensschritte eines Verfahrens nach einem der Ansprüche 1 bis 5 auf einer Rechnereinheit (68).

7. Vorrichtung für das Ermitteln der Lage wenigstens eines Punkts (P) auf oder in einem transparenten Gegenstand, insbesondere einer Linse (12), der eine erste optisch wirksame Fläche (76) und eine zweite optisch wirksame Fläche (78) hat, in einem Koordinatensystem (36),
mit
wenigstens einer Aufnahmeeinrichtung (20, 20')
für das Aufnehmen eines ersten Bilds eines Abschnitts des Gegenstands, insbesondere der Linse (12), in dem ein Bildpunkt des wenigstens einen Punkts angeordnet ist, in einer vorzugsweise zu der Halteeinrichtung (14) referenzierten ersten Aufnahmeposition aus einer ersten Aufnahmerichtung (32, 32') mit einem ersten Abbildungsstrahlengang und
für das Aufnehmen wenigstens eines weiteren Bilds des Abschnitts des Gegenstands, insbesondere der Linse (12), in dem ein Bildpunkt des wenigstens einen Punkts angeordnet ist, in wenigstens einer von der ersten Aufnahmeposition verschiedenen, vorzugsweise zu der Halteeinrichtung (14) referenzierten weiteren Aufnahmeposition aus wenigstens einer von der ersten Aufnahmerichtung (32) verschiedenen weiteren Aufnahmerichtung (34, 34') mit einem weiteren Abbildungsstrahlengang;
wenigstens einer Beleuchtungseinrichtung (44, 44') für das Beaufschlagen des Gegenstands, insbesondere der Linse (12), mit in Bezug auf den ersten Abbildungsstrahlengang koaxialem Beleuchtungslicht (58) in der ersten Aufnahmerichtung (32, 32') und
für das Beaufschlagen des Gegenstands, insbesondere der Linse (12), mit in Bezug auf den weiteren Abbildungsstrahlengang koaxialem Beleuchtungslicht (58) in der weiteren Aufnahmerichtung (34, 34'), und
wenigstens einer Retroreflektoreinrichtung (54) mit einem Retroreflektor (56), der dazu dient, das den Gegenstand, insbesondere die Linse (12), durchsetzende Beleuchtungslicht (58) in sich selbst zurückzureflektieren,
wenigstens einer weiteren Aufnahmeeinrichtung (20') für das Aufnehmen eines ersten Bilds eines Abschnitts des Gegenstands, insbesondere der Linse (12), in dem ein Bildpunkt des wenigstens einen Punkts angeordnet ist, in einer vorzugsweise zu der Halteeinrichtung (14) referenzierten ersten Aufnahmeposition aus einer ersten Aufnahmerichtung (32') mit einem ersten Abbildungsstrahlengang und
für das Aufnehmen wenigstens eines weiteren Bilds des Abschnitts des Gegenstands, insbesondere der Linse (12), in dem ein Bildpunkt des wenigstens einen Punkts angeordnet ist, in wenigstens einer von der ersten Aufnahmeposition verschiedenen zu der Halteeinrichtung (14) referenzierten weiteren Aufnahmeposition aus wenigstens einer von der ersten Aufnahmerichtung (32') verschiedenen weiteren Aufnahmerichtung (34') mit einem weiteren Abbildungsstrahlengang;
wenigstens einer weiteren Beleuchtungseinrichtung (44') für das Beaufschlagen des Gegenstands, insbesondere der Linse (12), mit in Bezug auf den ersten Abbildungsstrahlengang koaxialem Beleuchtungslicht (58) in der ersten Aufnahmerichtung (32') und
für das Beaufschlagen des Gegenstands, insbesondere der Linse (12), mit in Bezug auf den weiteren Abbildungsstrahlengang koaxialem Beleuchtungslicht (58) in der weiteren Aufnahmerichtung (34, 34'), und
wenigstens einer weiteren Retroreflektoreinrichtung (54') mit einem Retroreflektor (56'), der dazu dient, das den Gegenstand, insbesondere die Linse (12), durchsetzende Beleuchtungslicht (58) in sich selbst zurückzureflektieren,
wobei die wenigstens eine Retroreflektoreinrichtung (54) und die wenigstens eine weitere Retroreflektoreinrichtung (54') jeweils einen verlagerbaren Retroreflektor (56, 56') enthalten, der in eine erste Einstellung und in eine von der ersten Einstellung verschiedene weitere Einstellung bewegt werden kann und der in der ersten Einstellung dazu dient, das den Gegenstand, insbesondere die Linse (12) durchsetze Beleuchtungslicht (58) auf einer der ersten oder der zweiten optisch wirksamen Fläche (76, 78) zugewandten Seite in sich selbst zurückzureflektieren und der in der von der ersten Einstellung verschiedenen weiteren Einstellung dazu dient, das den Gegenstand, insbesondere die Linse (12) durchsetzende Beleuchtungslicht (58) freizugeben.

8. Vorrichtung nach Anspruch 7, **dadurch gekennzeichnet, dass** die wenigstens eine Aufnahmeeinrichtung (20, 20') für das Aufnehmen eines ersten Bilds eines Abschnitts des Gegenstands, insbesondere der Linse (12), in einer vorzugsweise zu der Halteeinrichtung (14) referenzierten ersten Aufnahmeposition aus einer ersten Aufnahmerichtung (32, 32') eine erste Kamera (22, 22') enthält und für das Aufnehmen wenigstens eines weiteren Bilds eines Abschnitts des Gegenstands, insbesondere der Linse (12), in wenigstens einer von der ersten Aufnahmeposition verschiedenen, vorzugsweise zu der Halteeinrichtung (14) referenzierten weiteren Aufnahmeposition aus wenigstens einer von der ersten Aufnahmerichtung (32, 32') verschiedenen weiteren Aufnahmerichtung (34, 34') wenigstens eine weitere Kamera (24) enthält.

9. Vorrichtung nach einem der Ansprüche 7 oder 8 mit einer Rechnereinheit (68), die ein Computerprogramm nach Anspruch 6 enthält.

10. System (200) für das Ermitteln der räumlichen Struktur eines Gegenstands, insbesondere einer Linse (12), der eine erste optisch wirksame Fläche (76) und eine zweite optisch wirksame Fläche (78) hat, mit
einer Halteeinrichtung (14) für den Gegenstand, insbesondere die Linse (12);
einer Messstation für das Bestimmen der Topografie der ersten optisch wirksamen Fläche (76) des Gegenstands, insbesondere der Linse (12);
einer nach einem der Ansprüche 7 bis 9 ausgebildete Vorrichtung (10) für das Ermitteln der Lage wenigstens eines Punkts (P) auf der ersten optisch wirksamen Fläche (76) in einem Koordinatensystem (36); und
einer Rechnereinheit (68) für das Berechnen der räumlichen Struktur des Gegenstands, insbesondere der Linse (12), aus der Topografie der ersten optisch wirksamen Fläche (76), aus der Lage wenigstens eines Punkts (P) auf der ersten optisch wirksamen Fläche (76) in einem Koordinatensystem (36) und aus einem zu dem Koordinatensystem (36) referenzierten Datensatz über die Topografie der zweiten optisch wirksamen Fläche (78).

11. System nach Anspruch 10, **dadurch gekennzeichnet, dass**
die Messstation eine Vielzahl von Punktlichtquellen (81) aufweist, die für das Bereitstellen von Licht dienen, das an der zu vermessenden optisch wirksamen Fläche (76) eines in dem Aufnahmebereich angeordneten Gegenstands, insbesondere der Linse (12) reflektiert wird,
wobei die Messstation wenigstens eine Kamera (25) für das Erfassen einer Helligkeitsverteilung enthält, die von dem an der zu vermessenden optisch wirksamen Fläche (76) reflektierten Licht der Punktlichtquellen (81) auf einem Bildsensor (28) hervorgerufen wird;
oder
wobei die Messstation die Topografie der ersten optisch wirksamen Fläche (76) des Gegenstands, insbesondere der Linse (12), mit einer nach dem Prinzip der Streifenprojektion oder der Musterprojektion arbeitenden Messmethode bestimmt.

12. Verwendung einer gemäß einem der Ansprüche 7 bis 9 ausgebildeten Vorrichtung oder eines gemäß Anspruch 10 oder 11 ausgebildeten Systems (200) für die Qualitätsüberwachung in einer Brillenglasfertigungseinrichtung.

## Claims

1. Method for determining the topography of at least one section of an optically active surface (76) of an article, in particular a lens (12), which has a first optically active surface (76) and a second optically active surface (78),
**characterized by** the following steps:
determining the position of a multiplicity of points on or in the article, in particular the lens (12), by
recording a first image of a section of the article, in particular the lens (12), in which the at least one point is arranged, in a first recording position, preferably referenced to the holding device (14), from a first recording direction (32), using a first imaging beam path,
the article, in particular the lens (12), being illuminated by light (58) that is coaxial with the first imaging beam path in the first recording direction (32), which light passes through the article, in particular the lens (12), and, after passing through the article, in particular the lens (12), is reflected back onto itself, so that the illuminating light (58) passes through the article, in particular the lens (12), once more;
recording at least one further image of the section of the article, in particular the lens (12), in which the at least one point is arranged, in at least one further recording position, preferably referenced to the holding device (14), which is different from the first recording position, from at least one further recording direction (34) that is different from the first recording direction (32), using a further imaging beam path,
the article, in particular the lens (12), being illuminated by light (58) that is coaxial with the further imaging beam path in the at least one further recording direction (34), which light passes through the article, in particular the lens (12), and, after passing through the article, in particular the lens (12), is reflected back onto itself, so that the illuminating light (58) passes through the article, in particular the lens (12), once more; and
reconstructing spatial coordinates of the at least one point from image coordinates of the point in the first image and from image coordinates of the point in the at least one further image,
calculating the topography of the at least one section of the optically active surface (76) of the article, in particular the lens (12), from the determined position of the multiplicity of points,
**characterized in that**
on the basis of the determined position, points from the multiplicity of points of which the position has been determined are qualified as surface points lying on the first optically active surface (76) or the second optically active surface (78).

2. Method according to Claim 1, **characterized in that** the qualification of points as surface points is carried out by means of bundle compensation calculation.

3. Method according to Claim 1 or 2, **characterized in that** compensation surfaces are calculated from the determined position of the multiplicity of points, and/or **in that** in the calculation of the topography of the at least one section of the optically active surface (76, 78) of the article, in particular the lens (12), the law of refraction is taken into account.

4. Method according to one of Claims 1 to 3, **characterized in that** the position of the at least one further recording position is referenced to the position of the first recording position and/or **in that** the position of the at least one further recording direction (34) is referenced to the position of the first recording direction (32) .

5. Method according to one of Claims 1 to 4, **characterized in that** the section of the article, in particular the lens (12), in which the at least one point is arranged is the first optically active optical surface (76) or part of the first optically active surface (76), or **in that** the section of the article, in particular the lens (12), in which the at least one point is arranged is the second optically active optical surface (78) or part of the second optically active surface (78), or **in that** the section of the article, in particular the lens (12), in which the at least one point is arranged lies in the interior of the article, in particular the lens (12) .

6. Computer program for carrying out the method steps of a method according to one of Claims 1 to 5 on a computer unit (68).

7. Apparatus for determining the position of at least one point (P) on or in a transparent article, in particular a lens (12), which has a first optically active surface (76) and a second optically active surface (78), in a coordinate system (36),
comprising
at least one recording device (20, 20')
for recording a first image of a section of the article, in particular the lens (12), in which an image point of the at least one point is arranged, in a first recording position, preferably referenced to the holding device (14), from a first recording direction (32, 32'), using a first imaging beam path, and
for recording at least one further image of the section of the article, in particular the lens (12), in which an image point of the at least one point is arranged, in at least one further recording position, preferably referenced to the holding device (14), which is different from the first recording position, from at least one further recording direction (34, 34') that is different from the first recording direction (32), using a further imaging beam path;
at least one illuminating device (44, 44') for illuminating the article, in particular the lens (12), with light (58) that is coaxial in relation to the first imaging beam path in the first recording direction (32, 32'), and
for illuminating the article, in particular the lens (12), with light (58) that is coaxial in relation to the further imaging beam path in the further recording direction (34, 34'), and
at least one retroreflector device (54) having a retroreflector (56) which is used to reflect the illuminating light (58) passing through the article, in particular the lens (12), back onto itself,
at least one further recording device (20') for recording a first image of a section of the article, in particular the lens (12), in which an image point of the at least one point is arranged, in a first recording position, preferably referenced to the holding device (14), from a first recording direction (32'), using a first imaging beam path, and
for recording at least one further image of the section of the article, in particular the lens (12), in which an image point of the at least one point is arranged, in at least one further recording position, preferably referenced to the holding device (14), which is different from the first recording position, from at least one further recording direction (34') that is different from the first recording direction (32'), using a further imaging beam path;
at least one further illuminating device (44') for illuminating the article, in particular the lens (12), with light (58) that is coaxial in relation to the first imaging beam path in the first recording direction (32'), and
for illuminating the article, in particular the lens (12), with light (58) that is coaxial in relation to the further imaging beam path in the further recording direction (34, 34'), and
at least one further retroreflector device (54') having a retroreflector (56') which is used to reflect the illuminating light (58) passing through the article, in particular the lens (12), back onto itself,
wherein
the at least one retroreflector device (54) and the at least one further retroreflector device (54') each contain a displaceable retroreflector (56, 56') which can be moved to a first setting and to a further setting different from the first setting, and which, in the first setting, is used to reflect the illuminating light (58) passing through the article, in particular the lens (12), back onto itself on a side facing the first or the second optically active surface (76, 78) and which, in the further setting different from the first setting, is used to expose the illuminating light (58) passing through the article, in particular the lens (12).

8. Apparatus according to Claim 7, **characterized in that** the at least one recording device (20, 20') contains a first camera (22, 22') for recording a first image of a section of the article, in particular the lens (12), in a first recording position, preferably referenced to the holding device (14), from a first recording direction (32, 32'), and at least one further camera (24) for recording at least one further image of a section of the article, in particular the lens (12), in at least one further recording position, preferably referenced to the holding device (14), that is different from the first recording position, from at least one further recording direction (34, 34') that is different from the first recording direction (32, 32').

9. Apparatus according to either of Claims 7 and 8 comprising a computer unit (68) which contains a computer program according to Claim 6.

10. System (200) for determining the physical structure of an article, in particular a lens (12), which has a first optically active surface (76) and a second optically active surface (78), comprising
a holding device (14) for the article, in particular the lens (12);
a measuring station for determining the topography of the first optically active surface (76) of the article, in particular the lens (12);
an apparatus (10) formed in accordance with one of Claims 7 to 9 for determining the position of at least one point (P) on the first optically active surface (76) in a coordinate system (36); and
a computer unit (68) for calculating the physical structure of the article, in particular the lens (12), from the topography of the first optically active surface (76), from the position of at least one point (P) on the first optically active surface (76) in a coordinate system (36) and from a dataset, referenced to the coordinate system (36), about the topography of the second optically active surface (78).

11. System according to Claim 10, **characterized in that**
the measuring station has a multiplicity of point light sources (81) which are used to provide light which is reflected at the optically active surface (76) that is to be measured of an article, in particular the lens (12), arranged in the recording area,
wherein the measuring station contains at least one camera (25) for detecting a brightness distribution which is brought about on an image sensor (28) by the light from the point light sources (81) that is reflected on the optically active surface (76) that is to be measured;
or
wherein the measuring station determines the topography of the first optically active surface (76) of the article, in particular the lens (12), by using a measuring method operating on the principle of fringe projection or pattern projection.

12. Use of an apparatus formed in accordance with one of Claims 7 to 9 or a system (200) formed in accordance with Claim 10 or 11 for quality monitoring in a spectacle lens manufacturing device.

## Revendications

1. Procédé de détermination de la topographie d'au moins une section d'une surface optiquement efficace (76) d'un objet, notamment d'une lentille (12), qui possède une première surface optiquement efficace (76) et une deuxième surface optiquement efficace (78),
**caractérisé par** les étapes suivantes :
détermination de la position d'une pluralité de points sur ou dans l'objet, notamment la lentille (12), par
prise de vues d'une première image d'une section de l'objet, notamment de la lentille (12), dans laquelle est disposé au moins un point, dans une position de prise de vues référencée de préférence par rapport au système de maintien (14) à partir d'une première direction de prise de vues (32) avec une première trajectoire de faisceaux de reproduction,
l'objet, notamment la lentille (12), étant soumis dans la première direction de prise de vues (32) à une lumière d'éclairage coaxiale (58) par rapport à la première trajectoire de faisceau de reproduction, qui traverse l'objet, notamment la lentille (12), et est rétroréfléchie en elle-même après traversée de l'objet, notamment de la lentille (12), de telle sorte que la lumière d'éclairage (58) traverse à nouveau l'objet, notamment la lentille (12),
prise de vues d'au moins une autre image de la section de l'objet, notamment de la lentille (12), dans laquelle est disposé au moins un point, dans au moins une autre position de prise de vues différente de la première position de prise de vues, référencée de préférence par rapport au système de maintien (14) à partir d'au moins une autre direction de prise de vues (34) différente de la première direction de prise de vues (32) avec une autre trajectoire de faisceaux de reproduction,
l'objet, notamment la lentille (12), étant soumis dans au moins une autre direction de prise de vues (34) à une lumière d'éclairage coaxiale (58) par rapport à l'autre trajectoire de faisceau de reproduction, qui traverse l'objet, notamment la lentille (12), et est rétroréfléchie en elle-même après la traversée de l'objet, notamment de la lentille (12) de telle sorte que la lumière d'éclairage (58) traverse à nouveau l'objet, notamment la lentille (12), et
reconstruction des coordonnées locales d'au moins un point à partir des coordonnées d'image du point dans la première image à partir des coordonnées d'image du point dans au moins une autre image,
calcul de la topographie d'au moins une section de la surface optiquement efficace (76) de l'objet, notamment de la lentille (12), à partir de la position déterminée de la pluralité de points,
**caractérisé en ce que**
des points sont qualifiés à partir de la pluralité de points, dont la position a été déterminée, sur la base de la position déterminée en tant que points de surface situés sur la première surface optiquement efficace (76) ou la deuxième surface optiquement efficace (78).

2. Procédé selon la revendication 1, **caractérisé en ce que** la qualification des points a lieu en tant que points de surface au moyen du calcul de compensation des faisceaux.

3. Procédé selon la revendication 1 ou 2, **caractérisé en ce que** des surfaces de compensation sont calculées à partir de la position déterminée de la pluralité de points et/ou **en ce qu'**on tient compte de la loi de la réfraction lors du calcul de la topographie d'au moins une section de la surface optiquement efficace (76,78) de l'objet, notamment de la lentille (12).

4. Procédé selon l'une quelconque des revendications 1 à 3, **caractérisé en ce que** la position d'au moins une autre position de prise de vues est référencée par rapport à la position de la première position de prise de vues et/ou **en ce que** la position d'au moins une autre direction de prise de vues (34) est référencée par rapport à la position de la première direction de prise de vues (32) .

5. Procédé selon l'une quelconque des revendications 1 à 4, **caractérisé en ce que** la section de l'objet, notamment de la lentille (12), dans laquelle est disposé au moins un point, est la première surface optique optiquement efficace (76) ou une partie de la première surface optiquement efficace (76) ou **en ce que** la section de l'objet, notamment de la lentille (12), dans laquelle est disposé au moins un point, est la deuxième surface optique optiquement efficace (78) ou une partie de la deuxième surface optiquement efficace (78) ou en ce que la section de l'objet, notamment de la lentille (12), dans laquelle est disposé au moins un point, se situe à l'intérieur de l'objet, notamment de la lentille (12).

6. Programme informatique pour l'exécution des étapes de procédé d'un procédé selon l'une quelconque des revendications 1 à 5 sur un ordinateur (68).

7. Dispositif pour la détermination de la position d'au moins un point (P) sur ou dans un objet transparent, notamment une lentille (12), qui possède une première surface optiquement efficace (76) et une deuxième surface optiquement efficace (78), dans un système de coordonnées (36)
avec
au moins un système de prise de vues (20,20')
pour la prise de vues d'une première image d'une section de l'objet, notamment de la lentille (12), dans laquelle est disposé un point d'image d'au moins un point, dans une première position de prise de vues référencée par rapport au système de maintien (14) à partir d'une première direction de prise de vues (32,32') avec une première trajectoire de faisceaux de reproduction, et
pour la prise de vues d'au moins une autre image de la section de l'objet, notamment de la lentille (12), dans laquelle est disposé un point d'image d'au moins un point, dans au moins une autre position de prise de vues différente de la première position de prise de vues, référencée de préférence par rapport au système de maintien (14) à partir d'au moins une autre direction de prise de vues (34,34') différente de la première direction de prise de vues (32) avec une autre trajectoire de faisceau de reproduction,
au moins un système d'éclairage (44,44') pour la soumission de l'objet, notamment de la lentille (12), à une lumière d'éclairage (58) coaxiale dans la première direction de prise de vues (32,32') par rapport à la première trajectoire de faisceau de reproduction, et
pour la soumission de l'objet, notamment de la lentille (12), à une lumière d'éclairage coaxiale (58) par rapport à l'autre trajectoire de faisceaux de reproduction dans l'autre direction de prise de vues (34,34'), et
au moins un système de rétroréflecteur (54) avec un rétroréflecteur (56) qui sert à rétroréfléchir en lui-même la lumière d'éclairage (58) traversant l'objet, notamment la lentille (12),
au moins un autre système de prise de vues (20') pour la prise de vues d'une première image d'une section de l'objet, notamment de la lentille (12), dans lequel est disposé un point d'image d'au moins un point, dans une première position de prise de vues référencée de préférence par rapport au système de maintien (14) à partir d'une première direction de prise de vues (32') avec une première trajectoire de faisceaux de reproduction, et
pour la prise de vues d'au moins une autre image de la section de l'objet, notamment de la lentille (12), dans lequel est disposé un point d'image d'au moins un point, dans au moins une autre position de prise de vues différente de la première position de prise de vues référencée par rapport au système de maintien (14) à partir d'au moins une autre direction de prise de vues (34') différente de la première direction de prise de vues (32') avec une autre trajectoire de faisceaux de reproduction,
au moins un autre système d'éclairage (44') pour la soumission de l'objet, notamment de la lentille (12) à une lumière d'éclairage (58) coaxiale par rapport à la première trajectoire de faisceaux de reproduction dans la première direction de prise de vues (32'), et
pour la soumission de l'objet, notamment de la lentille (12), à une lumière d'éclairage coaxiale (58) par rapport à l'autre trajectoire de faisceaux de reproduction dans l'autre direction de prise de vues (34, 34'), et
au moins un autre système de rétroréflecteur (54') avec un rétroréflecteur (56'), qui sert à rétroréfléchir en lui-même la lumière d'éclairage (58) traversant l'objet, notamment la lentille (12),
au moins un système de rétroréflecteur (54) et au moins un autre système de rétroréflecteur (54') contenant respectivement un rétroréflecteur déplaçable (56,56'), qui peut être déplacé dans un premier réglage et dans un autre réglage différent du premier réglage et qui sert dans le premier réglage à rétroréfléchir en lui-même la lumière d'éclairage (58) traversant l'objet, notamment la lentille (12) sur un côté tourné vers la première ou la deuxième surface optiquement efficace (76,78) et qui sert dans l'autre réglage différent du premier réglage à libérer la lumière d'éclairage (58) traversant l'objet, notamment la lentille (12).

8. Dispositif selon la revendication 7, **caractérisé en ce qu'**au moins un système de prise de vues (20,20') pour la prise de vues d'une première image d'une section de l'objet, notamment de la lentille (12), contient une première caméra (22,22') dans une première position de prise de vues référencée de préférence par rapport au système de maintien (14) à partir d'une première direction de prise de vues (32,32') et contient au moins une autre caméra (24) pour la prise de vues d'au moins une autre image d'une section de l'objet, notamment de la lentille (12), dans au moins une autre position de prise de vues différente de la première position de prise de vues, référencée de préférence par rapport au système de maintien (14) à partir d'au moins une autre direction de prise de vues (34,34') différente de la première direction de prise de vues (32, 32').

9. Dispositif selon l'une quelconque des revendications 7 ou 8 avec un ordinateur (68), qui contient un programme informatique selon la revendication 6.

10. Système (200) pour la détermination de la structure spatiale d'un objet, notamment d'une lentille (12), qui possède une première surface optiquement efficace (76) et une deuxième surface optiquement efficace (78), avec
un système de maintien (14) pour l'objet, notamment la lentille (12),
un poste de mesure pour la détermination de la topographie de la première surface optiquement efficace (76) de l'objet, notamment de la lentille (12),
un dispositif (10) constitué selon l'une quelconque des revendications 7 à 9 pour la détermination de la position d'au moins un point (P) sur la première surface optiquement efficace (76) dans un système de coordonnées (36), et
un ordinateur (68) pour le calcul de la structure spatiale de l'objet, notamment de la lentille (12), à partir de la topographie de la première surface optiquement efficace (76), à partir de la position d'au moins un point (P) sur la première surface optiquement efficace (76) dans un système de coordonnées (36) et à partir d'un ensemble de données référencées par rapport au système de coordonnées (36) concernant la topographie de la deuxième surface optiquement efficace (78).

11. Système selon la revendication 10, **caractérisé en ce que**
le poste de mesure comporte une pluralité de sources lumineuses ponctuelles (81), qui servent à la fourniture de lumière qui est réfléchie sur la surface optiquement efficace (76) à mesurer d'un objet disposé dans la zone de prise de vues, notamment de la lentille (12),
le poste de mesure contenant au moins une caméra (25) pour la saisie d'une répartition de la luminosité, qui est générée sur un capteur d'images (28) par la lumière réfléchie sur la surface optiquement efficace (76) à mesurer des sources lumineuses ponctuelles (81)
ou
le poste de mesure déterminant la topographie de la première surface optiquement efficace (76) de l'objet, notamment de la lentille (12), avec une méthode de mesure fonctionnant selon le principe de la projection de bandes ou de la projection d'un modèle.

12. Utilisation d'un dispositif constitué conformément à l'une quelconque des revendications 7 à 9 ou d'un système (200) constitué conformément à la revendication 10 ou 11 pour le contrôle de qualité d'une installation de fabrication de verres de lunettes.
